# EUROPEAN PATENT APPLICATION

(11) **EP 1 318 669 A1**
(43) Date of publication of application: **11.06.2003**
(21) Application number: 02026966.8
(22) Date of filing: 04.12.2002
(51) Int. Cl.: H04N 5/235

(54) **Image pick-up device and portable electronic device**

(30) Priority: 07.12.2001 JP 2001374025
(71) Applicant: Seiko Precision Inc., Narashino-shi, Chiba-ken (JP)
(72) Inventor: Ito, Akira, Seiko Precision Inc., Narashino-shi, Chiba-ken (JP); Seki, Yoichi, Seiko Precision Inc., Narashino-shi, Chiba-ken (JP); Nakano, Yoichi, Seiko Precision Inc., Narashino-shi, Chiba-ken (JP); Okuyama, Hirobumi, Seiko Precision Inc., Narashino-shi, Chiba-ken (JP)
(74) Representative: Hoffmann, Eckart, Dipl.-Ing.

(57) **Abstract**

An image pick-up device is described in which image information outputted from an image pick-up part (4) is used to obtain the distance to an object to be photographed so that a lens does not need to be driven to obtain this information. When a control part (1) decides that an image is darker than a prescribed first value based on a luminance signal in image information from a CCD camera (4), the control part stores the luminance signal in the image information inputted from the CCD camera 4 while the LED (9) does not emit light and then controls the LED (9) to emit light with a prescribed quantity of light. At this time, the control part (1) stores the luminance signal in the image information outputted from the CCD camera (4) to obtain the luminance difference between the two luminance signals. When the obtained luminance difference is not larger than a prescribed second value, the control part (1) controls the LED (9) to emit light with a first quantity of light (for instance, a maximum quantity of light). When the obtained luminance difference is larger than the prescribed second value and not larger than a prescribed third value (the second value < the third value), the control part (1) controls the LED (9) to emit light with a second quantity of light (the first quantity of light > the second quantity of light). When the obtained luminance difference is larger than the prescribed third value, the control part (1) controls the LED (9) to emit light with a third quantity of light (the second quantity of light > the third quantity of light) to perform a still image photographing operation.

## Description

The present invention relates to an image pick-up device, and more particularly to an image pick-up device capable of lighting an object to be photographed; the invention also relates to a portable electronic device such as a portable telephone using such image pick-up device.

When information corresponding to a distance is obtained in a digital still camera, there is sometimes employed an automatic focusing system (referred to as a "sharpness detecting system", hereinafter) in which the contrast of an image is obtained from image information obtained by an image sensor for picking-up an image such as a CCD and a lens is driven to make the contrast maximum and in-focus. In this case, since the information corresponding to the distance to an object to be photographed is obtained by using the image sensor for picking-up an image, the structure can be simplified.

A structure using a range finding sensor separately from the image sensor for picking-up an image to obtain distance information is disclosed in, for instance, JP-A-184381/2000 and JP-A-275033/2001.

Further, the distance information is used not only for the automatic focusing, but also for adjusting the amount of exposure upon stroboscopic photographing. Briefly described, when the distance to an object to be photographed is long, the amount of exposure at the time of stroboscopic photographing is increased. When the distance to an object to be photographed is short, the amount of exposure at the time of stroboscopic photographing is decreased.

For instance, in a portable electronic device such as a portable telephone provided with an image pick-up device, since the distance to an object to be photographed is not obtained, a control on the amount of exposure such that the quantity of stroboscopic light upon emission of stroboscopic light is controlled has not been carried out.

However, in the case of a sharpness detecting system, the focusing lens needs to be driven, so that a detection accuracy has been inconveniently deteriorated due to a bad condition of a driving system. Further, since the lens is driven, it has taken much time to obtain the distance information.

Further, when the range finding sensor is used separately from the image sensor for picking-up an image, the structure is disadvantageously complicated. Still further, portable electronic devices such as portable telephones having an image pick-up device do not detect information corresponding to the distance to an object to be photographed, so that it has been impossible to control the quantity of stroboscopic light. When the distance to an object to be photographed is short, the amount of exposure has been inconveniently excessively increased resulting in a whitish photograph (image).

It is an object of the present invention to provide an image-pick up device in which a lens does not need to be driven when information corresponding to a distance to an image to be photographed is obtained by using image information outputted from an image pick-up part. It is another object of the present invention to provide a portable electronic device having an image pick-up device capable of controlling the amount of exposure upon stroboscopic photographing.

These objects are achieved by an image pick-up device as claimed in claims 1 and 2, respectively. Preferred embodiments of the invention are subject-matter of the dependent claims.

In accordance with the invention as claimed in claim 1, since the output corresponding to the distance to the object to be photographed is generated on the basis of the image information outputted from the image pick-up part when the light emitting part emits light and the image information outputted from the image pick-up part when the light emitting part does not emit light, the driving operation of the lens may be unnecessary when the information corresponding to the distance to the object to be photographed is obtained by using the image information outputted from the image pick-up part.

In accordance with the embodiment defined in claim 2, a lens not need to be driven when the information corresponding to the distance to an object to be photographed is obtained by using the image information outputted from the image pick-up part, the amount of exposure upon photographing the still image can be controlled without requiring a distance measuring time by driving the lens and the deterioration of control on the amount of exposure upon photographing the still image due to the imperfect drive of the lens can be prevented.

According to the embodiment defined in claim 3, the quantity of light of the light emitting part upon photographing the still image can be controlled in accordance with information corresponding to a distance to an object to be photographed obtained on the basis of the difference between luminance detected from the image information outputted from the image pick-up part when the light emitting part emits the light and luminance detected from the image information outputted from the image pick-up part when the light emitting part does not emit the light in addition to the above-described effects. Consequently, the lens may not need to be driven when the information corresponding to the distance to an object to be photographed is obtained by using the image information outputted by the image pick-up part and the deterioration of control of an amount of exposure upon photographing the still image due to the imperfect drive of the lens can be prevented.

According to the embodiment defined in claim 4, the quantity of light of the light emitting part can be controlled on the basis of the distance to an object to be photographed or the reflection factor of the object to be photographed in accordance with a feature that as the distance to an object to be photographed becomes shorter and the reflection factor of the object to be photographed becomes higher, the luminance difference increases, in addition to the above-described effects.

According to the embodiment defined in claim 5, the size of the light emitting part can be reduced and noise can be decreased in addition to the above-described effects.

As claimed in claim 6, there can be provided a portable electronic device having the image pick-up device in which a focusing operation may be unnecessary when the information corresponding to the distance to the object to be photographed is obtained by using the image information outputted from the image pick-up part and the amount of exposure can be controlled upon stroboscopic photographing.

Now, a mode for carrying out the present invention will be described by referring to one embodiment shown in the drawings. In this embodiment, will be described an example in which a portable telephone as a potable electronic device is provided with an image pick-up device.
- Fig. 1: is a functional block diagram showing one embodiment of the present invention.
- Fig. 2: is a block diagram showing a CCD camera in Fig. 1.
- Fig. 3: is a front view showing an external appearance of the one embodiment of the present invention.
- Fig. 4: is a flow chart for explaining an operation of Fig. 1.

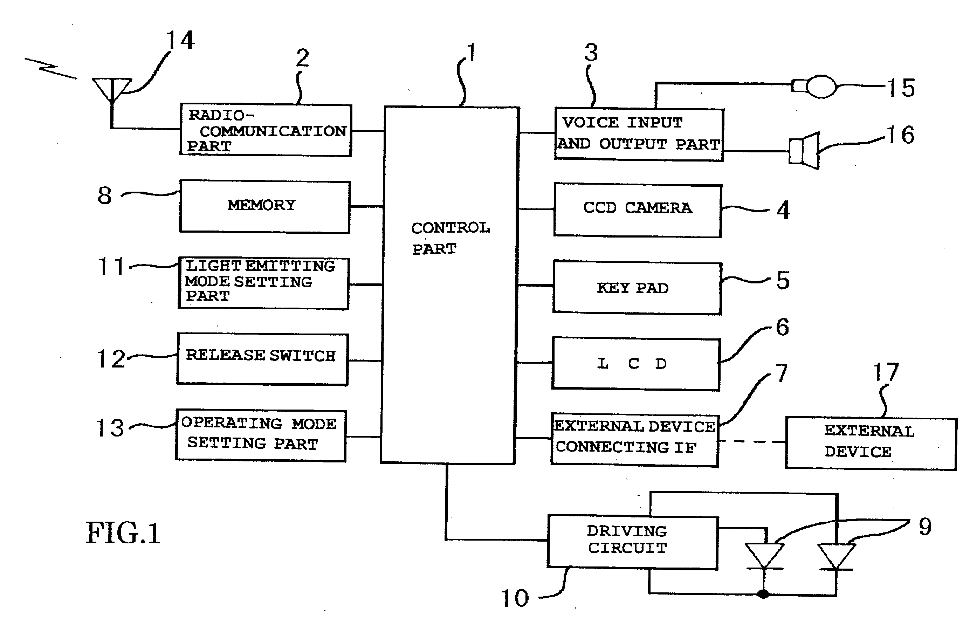

Fig. 1 shows an electric structure of the portable telephone in a functional block diagram. In the drawing, a control part 1 serving as a light quantity control part comprises a microcomputer including a CPU or the like as a main component to which a radio-communication part 2, a voice input and output part 3, a CCD camera 4 as an image pick-up part, a key pad 5, a color LCD 6 as a display part, an external device connecting interface 7, a memory 8, a driving circuit 10 for driving an LED 9 as a light emitting part for lighting an object to be photographed, a light emitting mode setting part 11 for setting the light emitting mode of the LED 9, a release switch 12 for outputting a release signal for instructing a still image photographing operation to be started and an operating mode setting part 13 also serving as a power switch are connected. An antenna 14 is connected to the radio-communication part 2. To the voice input and output part 3, a microphone 15 and a receiver 16 are connected.

When a transmitting voice is inputted, the microphone 15 converts the inputted transmitting voice into an electric signal from an acoustic signal to generate a voice transmitting signal and output the voice transmitting signal to the voice input and output part 3. When the voice transmitting signal is supplied to the voice input and output part 3 from the microphone 15, the voice input and output part 3 executes an amplifying process and an AID conversion process or the like to the voice transmitting signal to output the voice transmitting signal to the radio-communication part 2 through the control part 1. When the voice transmitting signal is supplied to the radio-communication part 2 from the voice input and output part 3 through the control part 1, the radio-communication part 2 performs a base band process and a wireless process or the like to the voice transmitting signal and emits the transmitting radio wave of a communication frequency band of a broad band (for instance, a communication frequency band allocated to a radio-communication using a Code Division Multiple Access connection (CDMA) system) from the antenna 14.

When the antenna 14 catches the radio wave of the communication frequency band of the broad band as a receiving radio wave, the radio communication part 2 performs a radio process and a base band process or the like to the caught radio wave to generate a voice receiving signal and outputs the voice receiving signal to the voice input and output part 3 through the control part 1. When the voice receiving signal is supplied to the voice input and output part 3 from the radio-communication part 2 through the control part 1, the voice input and output part 3 executes a D/A conversion process and an amplifying process or the like to the supplied voice receiving signal to output the voice receiving signal to the receiver 16. The receiver 16 to which the voice receiving signal is supplied from the voice input and output part 3 converts the voice receiving signal into an acoustic signal from an electric signal to generate a receiving voice and outputs the generated receiving voice.

The CCD camera 4 picks-up the image of an object to be photographed to generate (what is called a photoelectric transfer) electric image information corresponding to the photographed image to output the electric image information to the control part 1.

The key pad 5 is composed of various kinds of arranged keys such as a speaking start key, a redial key, speaking end key numeric character keys including [0] to [9], a * (asterisk) key, a # (sharp) key and F (function) keys, etc. When any key is operated, a key operating signal corresponding to the operation of the key is outputted to the control part 1. When the key operating signal is supplied to the control part 1 from the key pad 5, the control part 1 decodes the key operating signal to perform a process corresponding to the decoded result.

When a display signal is supplied to the LCD 6 from the control part 1, the LCD 6 displays display information corresponding to the sent display signal. An external device 17 is a digital still camera or the like having a function for photographing image information like the CCD camera 4. The external device connecting interface 7 inputs the image information photographed by the external device 17 and outputs the inputted image information to the control part 1 under the condition that the portable telephone 1 is connected to the external device 17. The display part is not limited to a color LCD and may be suitably changed to an organic EL display, etc.

The memory 8 constituting control means in association with the control part 1 includes memory elements such as a flash memory, a ROM, a RAM, a VRAM (video RAM), etc. and stores executable programs in the ROM. The control part 1 reads the executable programs and performs processes to execute various types of operations as mentioned below. The flash memory in the memory 8 stores the image information inputted from the CCD camera 4 upon operation of the release switch 12 and the image information inputted from the external device connecting interface 7. The VRAM in the memory 8 stores the image information inputted from the CCD camera 4 and displayed on the LCD 6 or the image information inputted from the external device connecting interface 7. The RAM in the memory 8 is used for various kinds of processes.

The LED 9 as the light emitting part is an LED for lighting an object to be photographed. In this embodiment, a white LED for applying white light is employed. As the white LED, for instance, a high luminance white LED (model number: NSPW510BS) or the like produced by Nichia Kagaku Kogyo Co.,Ltd. is used. In Fig. 1, although an example using the two LEDs 9 is shown, the number of LEDs may be suitably changed. For example, since the quantity of light required for lighting is different depending on the detecting characteristics of a CCD (image sensor) used for the CCD camera 4, a change can be made in such a way that when a large quantity of light is necessary for lighting, the number of LEDs 9 is increased to increase the quantity of light, and when a large quantity of light for lighting is not necessary, a single LED is used.

Now, the LED is complementarily described below. In recent years, LEDs which emit light with high luminance under the driving voltage of about several ten volts have been devised to be manufactured and advanced to be developed to a product which has been lighted by an electric bulb or the like and put to practical use. For example, the LED is used and put to practical use as a light emitting part of a pen type light or a lighting device attached to the head of a worker. In this connection, the light emitting part is not limited to the white LED and may be properly changed. For example, an LED which emits the light of desired color, a light emitting part which emits the white light by combining the LEDs of red, green and blue together, or a lamp such as an electric bulb may be employed. When an LED is used, a compact form can be realized. Further, when the white LED is used as the light emitting part, the white light can be emitted by one LED, so that a more compact form can be obtained and the number of parts can be reduced compare to the case in which the red, green and blue LEDs are combined together to emit the white light.

The driving circuit 10 drives the LED 9 on the basis of a light quantity control signal (output corresponding to the distance to an object to be photographed) for instructing the quantity of emitted light of the LED 9 outputted from the control part 1. Since the light quantity control signal outputted from the control part 1 may be information for designating the quantity of emitted light of the white LED 9, a control considering a white balance is not necessary, which is different from a case in which the quantity of light of the light emitting part for emitting white light is controlled by using the red LED, the green LED and the blue LED. Therefore, the light quantity control signal can be simplified.

The light emitting mode setting part 11 serves to set the light emitting mode of the LED 9. In this embodiment, an automatic light emitting mode for automatically controlling the quantity of emitted light of the LED 9 depending on the luminance of an object to be photographed and a light emitting inhibit mode for inhibiting the light emission of the LED 9 can be set. For instance, the automatic light emitting mode and the light emitting inhibit mode are switched every one operation. The control part 1 controls the light emission of the LED 9 in accordance with the mode or the like set by the light emitting mode setting part 11 and displays the set mode on the LCD 6.

The operating mode setting part 13 can selectively set a state (off mode) in which the power is turned off, a state (telephone mode) in which the transmitting and receiving operations of a telephone can be carried out, a state (view mode) in which image information stored in the memory 8 is displayed, a state (photographing mode) in which a photographing operation by a camera can be carried out and a state (light mode) in which the light of the LED (light emitting part) 9 is continuously emitted with a prescribed quantity of light (brightness). For instance, the modes including the off mode, the telephone mode, the view mode, the photographing mode and the light mode are switched every one operation. The control part 1 controls various kinds of operation in accordance with the modes set by the operating mode setting part 13 and displays the set modes on the LCD 6. A telephone call can be received in all modes except the off mode.

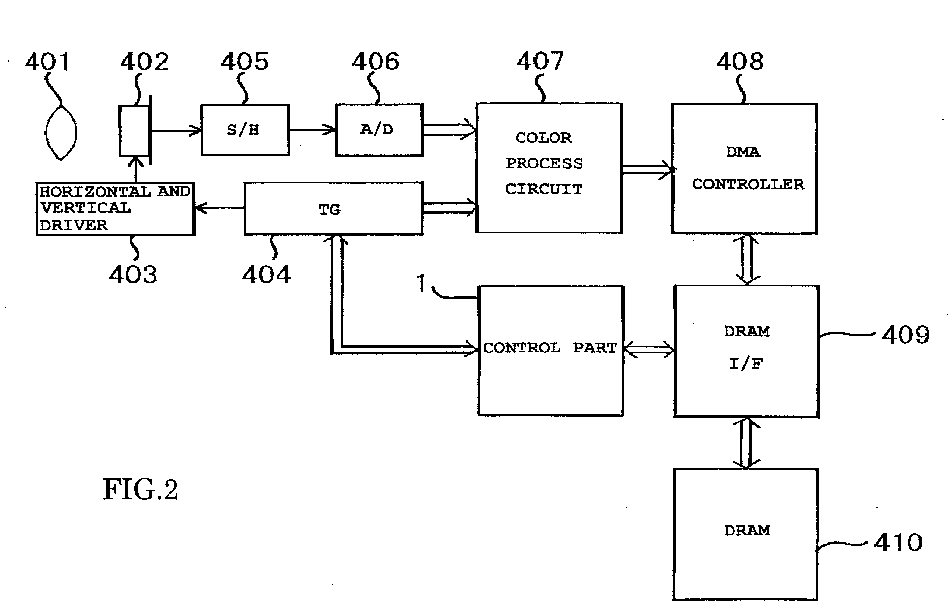

Fig. 2 is a block diagram showing the CCD camera 4 and the control part 1 and so on. In Fig. 2, a CCD 402 as an image pick-up element having a light receiving surface on which the optical image of an object to be photographed is formed by a photographing lens 401 is a solid state image pick-up element which performs a photoelectric transfer for outputting an analog signal corresponding to the optical image and transfers an electric charge in the form of an array. In this embodiment, the CCD 402 is used as what is called a solid state image sensor for converting two-dimensional optical information into an electric signal of time-series (serial row).

The CCD 402 is complementarily described below. The CCD 402 includes a photoelectric transfer part in which many photoelectric transfer elements are arranged in the form of an array and a charge storage part for storing the output charges of the photoelectric transfer elements and a charge reading part for reading the charges stored in the charge storage part in a prescribed system. Each of the photoelectric transfer elements forms a pixel. The CCD 402 in the present embodiment is a color CCD. Generally, since the pixel information itself of the CCD does not have color information, a color filter (a primary color filer using the three primary colors of light or a complementary color filter using the three primary colors of color) is mounted on the front surface of the color CCD.

A horizontal and vertical driver 403 and a timing generator (TG) 404 generate a driving signal necessary for reading the CCD 402. Specifically, while the CCD 402 sequentially designates each column, it generates a driving signal for transferring (reading) the information of the pixels for each row, that is, generates the horizontal and vertical driving signals respectively for serially reading out the pixel information.

A sample hold circuit 405 serves to sample the time series signal (in this step, an analog signal) read from the CCD 402 with a frequency adapted to the resolution of the CCD 402. After sampling, an automatic gain control (AGC) may be carried out.

An analog/digital converter 406 converts the sampled signal into a digital signal.

A color process circuit 407 generates a luminance/color difference multiplex signal (referred to as a "YUV signal", hereinafter) as the image information based on the output of the analog/digital converter 406. A signal format of the YUV signal is composed of three blocks having a fixed length called "components" including respectively independently a luminance signal and two color difference signals and the ratio of length (bit number) of the respective components is called a component ratio.

A DMA controller 408 transfers data between the color process circuit 407 and a DRAM 410 (to be exact a DRAM interface 409) without involving the control part 1, and carries out a so-called direct memory transfer (DMA: DIRECT MEMORY ACCESS).

The DRAM interface 409 serves as a signal interface between the DRAM 410 and the DRAM controller 408 and as a signal interface between the DRAM 410 and the control part 1.

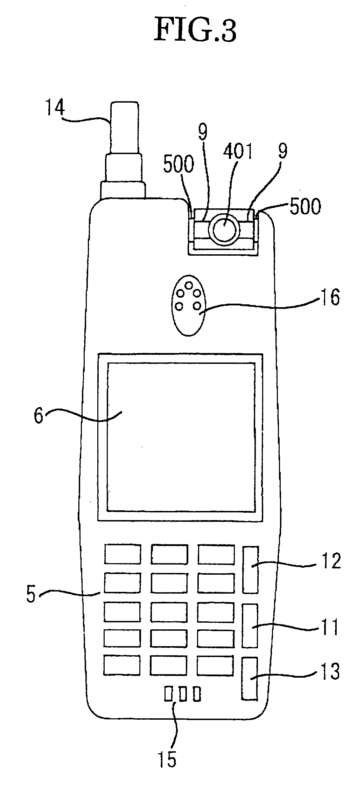

Fig. 3 is a view showing the external appearance of the portable telephone according to the present embodiment. In Fig. 3, components having the same structure as those of Fig. 1 are designated by the same reference numerals. The photographing lens 401, the CCD 402 and the LEDs 9 are integrally formed and capable of rotating about axes 500. Accordingly, a user himself can be photographed by using the CCD camera 4. In such a manner, since the image pick-up device using the LED as the light emitting part is integrally incorporated in the portable telephone, noise can be reduced, the form can be made more compact and the degree of freedom in design can be improved relative to those of the prior art using a xenon tube as a light emitting part. Further, since the white LED is used as the light emitting part, the structure can be simplified and the number of parts can be reduced as compared with that using, for instance, the red LED, the green LED and the blue LED are employed to emit white light.

The operation will now be described.

When the telephone mode is set in the operating mode setting part 13, the control part 1 allows the functions of the portable telephone using the radio-communication part 2, the voice input and output part 3, the antenna 14, the microphone 15 and the receiver 16 or the like to be operated, and a user can use the portable telephone as an ordinary portable telephone.

When the view mode is set in the operating mode setting part 13, the control part 1 supplies a display signal corresponding to the image information stored in the memory 8 to the LCD 6 to display an image corresponding to the image information on the LCD 6.

When the light mode is set by the operating mode setting part 13, the control part 1 drives the LED 9 to emit light with a prescribed quantity of light (brightness). Accordingly, when the light mode is set, the portable telephone can be used as a lighting device. Further, as described below, since the LED (light emitting part) 9 used for photographing is also used for lighting, the structure can be simplified. Since the LED is used as the light emitting part, a more compact structure can be realized. In the light mode, the quantity of light of the LED 9 may be adjusted by operating the key pad 5.

When the photographing mode is set by the operating mode setting part, the control part 1 operates the CCD camera 4 to fetch image information corresponding to the image of an object to be photographed which is photographed, updated and outputted in real time by the CCD camera 4, send the image information to the LCD 6 through the VRAM or the like of the memory 8 and display it on the LCD 6. The user determines a composition while viewing the LCD 6 in this state. At this time, the control part 1 recognizes the setting in the light emitting mode setting part 11.

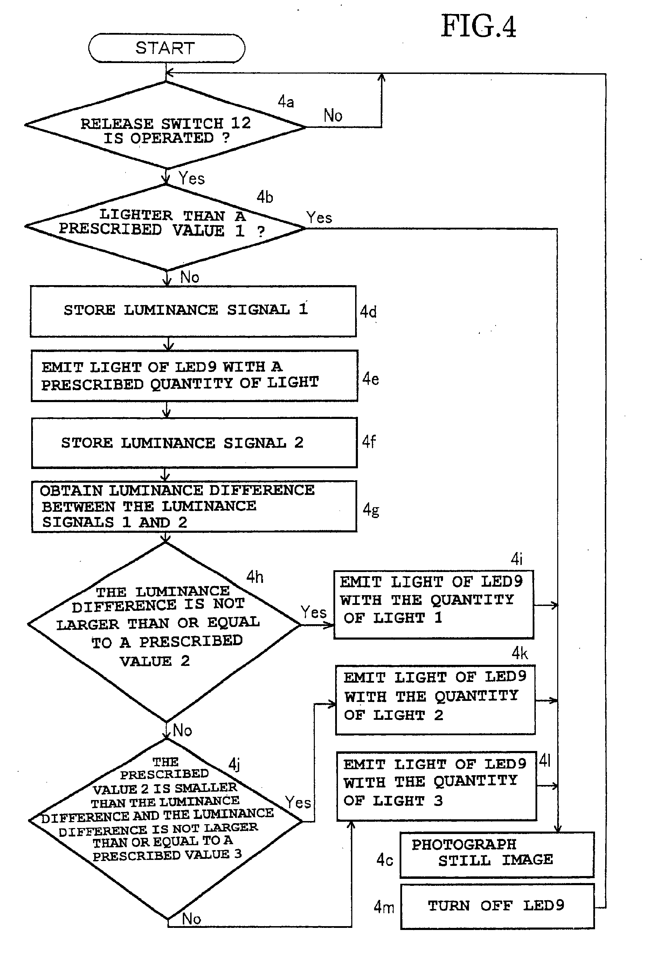

When the automatic light emitting mode is set by the light emitting mode setting part 11, an operation will be described by referring to Fig. 4.

When the release switch 12 is operated while the automatic light emitting mode is set (step 4a), if the control part 1 decides that an image displayed on the LCD 6 in accordance with a luminance signal included in image information inputted from the CCD camera 4 upon operation of the release switch 12 is lighter than a prescribed value 1 (in this case, it is assumed that the prescribed value 1 is stored in the memory 8)(step 4b), the light of the LED 9 is not emitted to photograph a still image (step 4c). Specifically, immediately after the release switch 12 is operated, a YUV signal stored in the DRAM 410 is fixed and the fixed YUV signal is fetched through the DRAM interface 409 and the display of the LCD 6 is fixed to an image corresponding to the fixed YUV signal. The control part 1 applies, for instance, a JPEG encoding process to the fetched YUV signal and then stores the signal in the flash memory of the memory 8.

When the control part 1 decides that the image displayed on the LCD 6 in accordance with the luminance signal is darker than the prescribed value 1 (step 4b), the control part 1 decides that the periphery (surrounding) is dark and stroboscopic light is necessary, and stores, in the RAM of the memory 8, the luminance signal, that is, a luminance signal (referred to as a "luminance signal 1", hereinafter) included in image information inputted from the CCD camera 4 when the release switch 12 is operated while the LED (light emitting part) 9 does not emit light (step 4d) and controls the LED 9 to emit light with a prescribed quantity of light (step 4e).

The control part 1 stores, in the RAM of the memory 8, a luminance signal (referred to as a "luminance signal 2", hereinafter) included in image information corresponding to an image of an object to be photographed which is photographed by the CCD camera 4 when the LED 9 emits light with a prescribed quantity of light (step 4f).

When the storage of the luminance signal 2 is completed, the control part 1 obtains the luminance difference between the luminance signal 1 and the luminance signal 2 (step 4g).

The luminance difference obtained in the step 4g will be complementarily described. A large luminance difference means that the quantity of light applied from the LED 9, reflected by an object to be photographed and received by the CCD camera 4 is larger than the quantity of light received by the CCD camera 4 when the LED 9 does not emit light. A small luminance difference means that the difference between the quantity of light received by the CCD camera 4 when the LED 9 does not emit light and the quantity of light applied from the LED 9, reflected by the object to be photographed and received by the CCD camera is small. As the distance to the object to be photographed becomes longer, the reflected light received by the CCD camera 4 is reduced. As the reflection factor of the object to be photographed becomes lower, the reflected light received by the CCD camera 4 is reduced. A large or small luminance difference is equivalent to information corresponding to the distance to the object to be photographed or the reflection factor of the object to be photographed. That is, the shorter the distance to the object to be photographed becomes, the larger the luminance difference becomes, and the higher the reflection factor of the object to be photographed becomes, the larger the luminance difference becomes.

When the obtained luminance difference is not larger than a prescribed value 2 (step 4h), the control part 1 decides that the amount of light from the LED 9 in the step 4e which is reflected by the object to be photographed is small and the reflection factor is low due to a remote object to be photographed, and outputs to the driving circuit 10 a light quantity control signal for controlling the LED 9 to emit light with the quantity of light 1 (for example, a maximum quantity of light) from the LED 9 (step 4i). This light quantity control signal serves as an output corresponding to the distance to the object to be photographed and an output corresponding to the reflection factor of the object to be photographed.

When the obtained luminance difference is larger than the prescribed value 2 and not larger than a prescribed value 3 (in this case, the prescribed value 2 < the prescribed value 3 < the prescribed value 1, and these values are previously stored in the memory 8) (step 4j), the control part 1 decides that the distance to the object to be photographed is medium and the reflection factor is about medium, and outputs to the driving circuit 10 a light quantity control signal for controlling the LED 9 to emit light with the quantity of light 2 (in this case the quantity of light 1 > the quantity of light 2) from the LED 9 (step 4k).

When the obtained luminance difference is larger than the prescribed value 3(step 4j), the control part 1 decides that the distance to the object to be photographed is short and the reflection factor is high and outputs to the driving circuit 10 a light quantity control signal for controlling the LED 9 to emit light with the quantity of light 3 (in this case the quantity of light 2 > the quantity of light 3) from the LED 9 (step 41).

When the control part 1 performs the operations of the steps 4i, 4k and 41, the control part 1 carries out the above-described still image photographing operation (step 4c). Specifically, after the light emission of the LED 9 is started, the YUV signal stored in the DRAM 410 is fixed, the fixed YUV signal is fetched through the DRAM interface 409 and the display of the LCD 6 is fixed to the image corresponding to the fixed YUV signal. The control part 1 applies, for instance, a JPEG encoding process to the fetched YUV signal, and then, stores the signal in the flash memory of the memory 8.

When the control part 1 completes the still image photographing operation, the control part 1 turns off the LED 9 (step 4m) to return to the step 4a.

As control means for the quantity of light, when a plurality of LEDs are provided, the number of LEDs 9 to be turned on may be changed or the driving current supplied to the same LED may be changed depending on the quantity of light. These means may be combined. In the case of a construction in which the driving current supplied to the LED is changed to control the quantity of light from the LED, the quantity of light can be controlled in the common LED. In the case of a construction in which plural LEDs are provided and the number of the LEDs to be driven is changed to control the quantity of light from the LEDs, the control of the quantity of light corresponding to at least the number of LEDs can be carried out and the degree of the quantity of light can be increased more than that of a single LED.

In the above description, although when the LED 9 is allowed to emit light, the quantity of light is controlled in three steps, the number of steps is not limited to the three steps and may be smaller or larger than the three steps depending on the luminance difference.

As described above, the quantity of light of the light emitting part upon photographing a still image can be controlled in accordance with information corresponding to the distance to an object to be photographed or the reflection factor of the object to be photographed obtained on the basis of the image information outputted from the image pick-up part when the light emitting part emits light, and the image information outputted from the image pick-up part when the light emitting part does not emit light. Further, the quantity of light of the light emitting part upon photographing a still image can be controlled in accordance with information corresponding to the luminance of the object to be photographed or the reflection factor of the object to be photographed obtained on the basis of the difference in luminance detected from the image information. Still further, as the distance to the object to be photographed becomes shorter, and the reflection factor of the object to be photographed becomes higher, the luminance difference becomes larger, and accordingly, if the quantity of light of the light emitting part upon photographing a still image is controlled on the basis of the luminance difference, the quantity of light of the light emitting part can be controlled in accordance with the distance to the object to be photographed or the reflection factor of the object to be photographed. In addition, since an output corresponding to the distance to the object to be photographed is generated on the basis of the image information outputted from the image pick-up part when the light emitting part emits light and the image information outputted from the image pick-up part when the light emitting part does not emit light, the lens does not need to be driven when information corresponding to the distance to the object to be photographed is obtained by using the image information outputted from the image pick-up part.

Further, since the image information used in order to decide whether or not a stroboscopic light is necessary upon photographing a still image is also used when information corresponding to the distance to the object to be photographed or the reflection factor of the object to be photographed is obtained, the image information detected once can be used for a plurality of processes.

Further, since an LED is employed as the light emitting part for applying light for lighting the object to be photographed, the form of the light emitting part may be compact. Thus, the degree of freedom in design is improved. Still further, since the LED is easily controlled to be turned on differently from a xenon tube, the LED may be used in various ways besides as a stroboscopic light for photographing an image in a dark surrounding as usual; for instance the LED may be used to light the object to be photographed so that a user can recognize a composition when the scenery is dark, hence the maneuverability of the user is increased. Further, since a voltage such high as several hundred volts is not necessary as driving voltage differently from the xenon tube, noise resulting from the high voltage can be reduced and a limitation in design due to the noise can be reduced compared to the prior art.

Further, since the light emitting part serves as a light emitting part when object distance information or the reflection factor information of the object to be photographed is obtained as well as what is called stroboscopic light upon photographing a still image when the release switch is operated, the structure is simplified.

When the photographing mode is set by the operating mode setting part, if the light emitting inhibit mode is set by the light emitting mode setting part 11, the control part 1 controls the LED 9 not to emit light and performs the still image photographing operation as in the above-described step 4c.

In the above description, although the structure using the CCD as the image pick-up part is employed, the present invention is not limited thereto, and any image sensor such as a CMOS sensor may be used.

Further, in the above description, although an example in which the image pick-up device is formed integrally with the portable telephone as the portable electronic device is explained, the portable electronic device is not limited to the portable telephone. For example, what is called a note type personal computer or a portable information terminal or the like may be employed. When the image pick-up device of the present invention is equipped integrally with the portable electronic device for performing a radio-communication such as the portable telephone, a lens for range finding does not need to be driven or an exclusive range finder may not be required.

In the above description, although the quantity of stroboscopic light is controlled in accordance with the luminance difference, since the luminance difference is information corresponding to the distance to an object to be photographed, for instance, driving means for driving the photographing lens 401 in the direction of an optical axis may be provided and this driving means may be driven in accordance with the luminance difference outputted from the control part 1 so that the photographing lens 401 and the CCD 402 may be controlled to focus.

According to the present invention, the quantity of light of the light emitting part upon photographing a still image can be controlled on the basis of the image information outputted from the image pick-up part when the light emitting part emits light and the image information outputted from the image pick-up part when the light emitting part does not emit light.

## Claims

1. An image pick-up device comprising:
an image pick-up part (4) for picking up the image of an object to be photographed to output image information;
a light emitting part (9) for lighting the object to be photographed; and
a control part (1) for generating an output corresponding to a distance to the object to be photographed on the basis of the image information outputted from the image pick-up part (4) when the light emitting part (9) emits light and the image information outputted from the image pick-up part (4) when the light emitting part (9) does not emit light.

2. An image pick-up device according to claim 1, further comprising:
a release switch (12) for instructing the image pick-up part to photograph a still image;
wherein said control part (1) is adapted to control the quantity of light of the light emitting part (9) upon photographing the still image on the basis of the image information outputted from the image pick-up part (4) when the light emitting part (9) emits light and the image information outputted from the image pick-up part (4) when the light emitting part (9) does not emit light.

3. An image pick-up device according to claim 2, wherein the control part (1) is adapted to control the quantity of light of the light emitting part (9) upon photographing the still image on the basis of the difference between the luminance detected from the image information outputted from the image pick-up part (4) when the light emitting part (9) emits the light and the luminance detected from the image information outputted from the image pick-up part (4) when the light emitting part (9) does not emit the light.

4. An image pick-up device according to claim 3, wherein the control part (1) is adapted to decrease the quantity of light of the light emitting part (9) upon photographing the still image as the difference in luminance increases.

5. An image pick-up device according to any one of claims 1 to 4, wherein the light emitting part (9) is an LED.

6. A portable electronic device equipped integrally with the image pick-up device according to any one of claims 1 to 5.
